# EUROPEAN PATENT SPECIFICATION

(11) **EP 1 850 683 B1**
(45) Date of publication and mention of the grant of the patent: **06.11.2013**
(21) Application number: 06710791.2
(22) Date of filing: 30.01.2006
(51) Int. Cl.: A23G 4/20, A23L 1/164, A23L 1/22, B01J 13/04, A23L 1/00, A21D 13/00

(54) **HEATED FOOD PRODUCT WITH COATING OF ENCAPSULATED FLAVOURS**
ERHITZTES NAHRUNGSMITTEL MIT EINER BESCHICHTUNG AUS EINGEKAPSELTEN AROMEN
PRODUIT ALIMENTAIRE CHAUFFE AVEC ENROBAGE D'AROMES ENCAPSULES

(30) Priority: 10.02.2005 US 651860 P
(43) Date of publication of application: 07.11.2007
(73) Proprietor: Firmenich SA, 1211 Geneva 8 (CH)
(72) Inventor: LE, Anh, MIDDLETOWN, DE, 19709 (US); BARRA, Jérôme, F-74160 Neydens (FR); MAUREL, Catherine, CH-1228 Plan-les-ouates (CH); GORDON, Jonathan, F., WAKEFIELD, RI, 02879 (US); CHIAVERINI, Michael, Boulder, CO, 80303 (US); NORMAND, Valéry, F-74490 St-jeoire-en-faucigny (FR)
(74) Representative: Dale, Gavin Christopher
(86) International application number: PCT/IB2006/050323
(87) International publication number: WO 2006/085240

(56) References cited:
- EP-A- 1 454 534
- WO-A-2006/045404
- WO-A1-00/25606
- GB-A- 2 079 129
- US-A- 4 755 390
- US-A- 5 709 902
- LYNE A: "Encapsulated flavourings - using the yeast cell" FOOD INGREDIENTS AND ANALYSIS INTERNATIONAL, LONDON, GB, vol. 24, no. 3, 2002, pages 8-9, XP009030880
- NELSON G ET AL: "Yeast delivery system" FOOD INGREDIENTS AND ANALYSIS INTERNATIONAL, LONDON, GB, September 1998 (1998-09), pages 13-14, XP009030829
- "Encapsulating a microcapsule made using cell wall of microorganism, e.g. yeast, comprises collecting ground dry cell wall and active material using ethanol, heating, coating with cyclodextrin and water spray drying and grinding" DERWENT, 5 June 2002 (2002-06-05), XP002280210 & KR 2002 042 297 A (NONG SHIM CO., LTD) 5 June 2002 (2002-06-05)

## Description

### Technical Field

The present invention relates to a method for preparing a food product comprising flavours, and a food product, obtainable by said method.

### Background

Many of the processes in food industry involve prolonged periods of extreme thermal treatment. Flavours, on the other hand, are often highly volatile compounds and tend to evaporate from food products during thermal treatments. Moreover, intense heat may lead to further losses through the degradation of sensitive flavour molecules.

The problem of volatilisation of flavours in heat-treated food becomes even more significant in food products in which the flavour is applied by a coating, and in which the food product is subsequently subjected to a heat treatment, for example baking or toasting. In these food products or processes, losses due to the thermal treatment are particularly high. Generally, the temperature of a coating solution during coating is above 25°C, or even above 35°C and may already lead to substantial flavour loss. If a further, even higher temperature treatment is to follow most of the flavours may be lost. The flavour loss can thus happen, for example in a food manufacturing facilities or, in the case of refrigerated pre-cooked food, during the step of final preparation in a restaurant or at home.

In EP 04100069.6 (unpublished) an edible product including flavouring microcapsules based on micro-organisms and at least one further carbohydrate material is disclosed. This encapsulation system was found to provide advantages to food products that have been heat-treated at temperatures above 70°C.

In EP 04103143.6 (unpublished) capsules based on micro-organisms and a carbohydrate matrix component are disclosed. These capsules are suitable also to encapsulate more hydrophilic functional agents, such as flavours.

EP 1252534 A1 discloses microcapsules wherein exogenous materials have been enclosed in the mycelium of micro-organisms, and wherein saccharides, proteins or sweeteners have been deposited on the surface of the micro-organism. However, the document specifies that the exogenous material may degenerate by heating, or that the flavour may disappear (page 13, lines line 29-33). These microcapsules are thus not a preferred solution for use in processes involving heat exposure.

LYNE A: "Encapsulated flavourings - using the yeast cell", FOOD INGREDIENTS AND ANALYSIS INTERNATIONAL, LONDON, GB, vol. 24, no. 3, 2002, pages 8-9, relates to the encapsulation of liquid active ingredients such as flavourings using the natural wall of yeast cells to provide a protection against heat, extrusion, oxidation and light.

WO2005/067733, which is prior art under Art. 54(3) EPC, discloses French fries coated with a batter comprising flavouring microcapsules. The fries are parfried at 180°C.

In view of the prior art, it becomes an objective to provide a way for preventing flavour loss in processes involving heat treatments. It is a further objective to apply flavours to food products to the surface of a food product while reducing volatilisation of the flavour before consumption. The surface of the food product is the part that comes first in contact with the epithelial layers of the oral cavity in which flavour receptors are located. It is thus a specific objective to provide food products coated with flavours that withstand evaporation even under high temperatures, but which easily are released once arriving in the oral cavity.

### Summary of the Invention

Remarkably, the inventors of the present invention found that if flavour-capsules based on a micro-organism, a matrix-component and at least one flavour are mixed with water and coated on food products, a surprising retention of flavours is obtained even though further processing steps involving high temperatures, such as drying, baking and/or toasting have occurred. Surprisingly, when suspended in aqueous solutions, the flavours encapsulated in a micro-organism and matrix component are not releaseed, as long as the aqueous solution is substantially free of oil or fat.

Accordingly, the present invention provides, in a first aspect, a method for preparing a food product comprising flavours, the method comprising the steps of
- providing capsules based on a micro-organism, a matrix component and at least one encapsulated flavour,
- mixing the capsules with water to obtain an aqueous suspension of capsules,
- coating a food product with the aqueous suspension to obtain a coated food product, and,
- drying, baking and/or toasting the coated food product.

In another aspect, the present invention provides a food product comprising a coating comprising flavours, wherein the flavour is encapsulated in yeast cells and a matrix component.

### Brief Description of the Drawings

Figure 1 shows mean mint/cooling intensity of sugar-free chewing gums coated with encapsulated (A) and non-encapsulated mint flavour (B). Encapsulation refers to capsules comprising a flavour, a micro-organism and a matrix component. In both series, the same amount of mint flavour was applied onto the gums.
Figure 2 shows mean lemon intensity of sugar-based chewing gums coated with encapsulated (A) and non-encapsulated lemon flavour (B). In both series, the same amount of lemon flavour was applied onto the gums.

### Detailed Description of the Preferred Embodiments

Within the context of this specification the word "comprises" is taken to mean "includes, among other things". It is not intended to be construed as "consists only of".

In the context of the present invention, percentages are generally percentages by weight of dry matter, unless otherwise indicated, for example by reference to aqueous solutions or percentages of solids, where the percentages refer to parts of the total solution, including water.

The term "mean" as used, for example in the expression "mean diameter" refers to the arithmetic mean or average.

The term "flavour", in the context of the present invention, may refer to a single flavouring molecule, or to a composition comprising several flavouring agents. Preferably, the term flavour composition refers to a composition of at least two flavour molecules preferably having different logP values. More preferably, the composition comprises at least one flavour compound with logP > 2 and/or at least one flavour compound with logP ≤ 2.

The term logP refers to the octanol/water partition coefficient of a specific functional agent to be encapsulated. For the purpose of the present invention, reference to a calculated logP (=clogP) value is made. This value is calculated by the software T. Suzuki, 1992, CHEMICALC 2, QCPE Program No 608, Department of Chemistry, Indiana University. See also T. J. Suzuki, Y. Kudo, J. Comput.-Aided Mol. Design (1990), 4, 155-198.

The term flavour also includes compounds that are perceived by mediation of the trigeminal nerve, such as cooling, salivating, pungent and tingling compounds, for example. Amongst the later, there can be cited molecules such as ethyl-3-p-menthanecarboxamide (available commercially from Millenium Chemicals Inc., under the tradename WS-3), 2-isopropyl-2,3-trimethylbutanamide (available commercially from Millenium Chemicals Inc., under the tradename WS-23), 3-(3-p-menthanyloxy)-1,2-propanediol (available commercially from Takasago Inc., under the tradename Coolact 10), isopulegol or 8-p-menthen-3-ol (available commercially from Takasago Inc., under the tradename Coolact P) and menthone glycerol ketal.

The term "flavour-capsules" or "capsules", for the purpose of the present invention, refers to capsules based on a micro-organism, a matrix component and at least one encapsulated flavour.

"A micro-organism", in the context of the present invention, does not refer to a single cell of a specific micro-organism. In contrast, the term also includes a multitude of individual micro-organisms or of different kinds of micro-organisms, for example, different kinds of yeasts.

The methods of the present invention comprise the step of providing capsules based on a micro-organism, a matrix component and at least one encapsulated flavour.

In order for the benefit from the advantageous properties in the processes of the invention to become apparent, at least part of the flavour needs to be enclosed within the cell wall of the micro-organism. Preferably, the flavours are within the cytoplasmic space of the micro-organism. The matrix component may be mixed with micro-organisms enclosing the flavour, followed by drying.

According to the present invention, the capsules based on a micro-organism, a matrix component and at least one flavour are prepared by a process comprising the steps of
a) mixing yeast with water to obtain an aqueous mixture,
b) adding a flavour to the aqueous mixture,
c) stirring the aqueous mixture including the flavour until at least part of the flavour has passed into the micro-organism,
d) adding the matrix component to the aqueous mixture comprising the at least partly encapsulated flavour, and,
e) drying the resulting mixture, or, alternatively, using the resulting mixture directly as an aqueous suspension of capsules in the process according to any of the preceding claims.

Steps a), b) and c) are familiar to the skilled person, for example from EP 1 454 534 A1, which discloses, in Example 1-6, the inclusion of flavourings in to yeast cell bodies. Similarly, J. R. P. Bishop et al. "Microencapsulation in yeast cells", J. Microencapsulation, 1998, vol. 15, no. 6, 761-773, disclose the encapsulation of high concentrations of essential oils into bakers yeast. Accordingly, an aqueous suspension of yeast and oil is mixed, which allows the oil to pass freely through the cell wall and membrane and to remain passively within the cell.

Preferably, the aqueous mixture comprising the micro-organism and water is a suspension of 10-30, preferably 15-25 wt.-% solids, depending on type of organism and equipment used.
According to step b), at least one flavour is added to the aqueous mixture. Of course, the flavour could also be added earlier, for example, together with the yeast and the water. The flavour is usually present in a hydrophobic solvent, such as an essential oil or a flavour dissolved in an oil, and, therefore, the addition of the flavour may entail the formation of an emulsion. Accordingly, emulsifiers, surfactants and/or stabilisers may also be added to the aqueous liquid, for example. Preferably, the dry-weight ratio of micro-organism to flavour in the aqueous liquid is in the range of 1:1 to 5:1, preferably 1.4:1 to 4:1.

According to step c) the aqueous mixture comprising the micro-organism, water and the material to be encapsulated is then stirred for 1 to 6 hours, preferably. Stirring, in the context of the present invention also refers to actions like agitating or mixing.

According to step d), the matrix component is added to the aqueous mixture. As is listed in EP 04103143.6 a variety of possible matrix components may be used. The matrix component comprises a carbohydrate, more preferably, the matrix component comprises at least 50wt.%, more preferably at least 80wt.% of carbohydrates. Preferably, the carbohydrate forming the matrix component is water soluble.

Preferably, the matrix component comprises dextrin; more preferably maltodextrin and/or corn syrup. Most preferably, the matrix component comprises maltodextrin and/or corn starch syrup having a mean dextrose equivalence of 5 - 25, preferably 6-20.

Step e) of the process provides drying of the resulting mixture, or, alternatively, f) using the resulting mixture directly as an aqueous suspension of capsules in the process of the present invention.

Drying may be performed by spray drying, freeze drying, fluidised bed drying and/or oven drying, for example. Preferably, the drying step is performed by spray drying.

Following steps a) to e) given above, dried flavour capsules based on a micro-organism, a matrix component and at least one encapsulated flavour may be provided.

The flavour capsules based on a micro-organism and a matrix component as obtained above have substantial advantages over the prior art. In particular, they are advantageous over capsules devoid of a matrix component in that they are suitable to encapsulate flavour compositions comprising different flavour molecules having different hydrophobicity and/or hydrophilicity. In this event, the matrix component is suitable to withhold more hydrophilic flavours, while hydrophobic flavours are encapsulated within the yeast cell's plasma membrane, in particular, within the phospholipid bilayer. In this way, the capsules are suitable to provide a more round up flavour profile than capsules based on encapsulated yeast only, for example.

The present invention comprises the step of coating a food product with an aqueous suspension of the flavour capsules.

The term food product, in the context of the present invention, refers to any edible solid material designed for staying for some time in or passing the oral cavity. Thus, the term food product does not only refer to foods consumed for their nutritional value, but also products which are ingested for other purposes, for example pharmaceuticals, which may be orally consumed for health benefits or in order to alleviate a disease state, or which remain in the oral cavity to deliver oral care benefits. Additionally, the food product may simply be ingested for perceptional or organoleptic reasons, such as typically found with chewing gums, other sweets or refreshing pills or films.

In an embodiment of the present invention, the food product is selected from the group consisting of a chewing gum, a gummy, a compressed tablet, a cracker, a cookie, a cereal bar, a pet food, and a snack, for example a snack chip. Preferably, the food product is a chewing gum, a cracker, or a breakfast cereal. The preparation of these products is well known to the skilled person and does not require further detail here.

Preferably, the food product, before a coating is applied, is present in a pre-cooked form, due to the fact that the present process comprises a further down-stream step of drying, baking and/or toasting the coated food product. For example, the food product may be a pre-baked cracker, onto which the aqueous suspension is sprayed, and which is toasted or dried thereafter, for example.

Preferably, the food products of the present invention have a water activity <0.7, more preferably <0.5 and most preferably <0.3. Products with lower water activity have better stability and are generally the direct result of the drying, baking and/or toasting steps of the present invention. Water activity in the context of the present invention may be determined by a Novasina, Type Aw Sprint RS50 apparatus, obtainable in Switzerland.

In a further step of the present invention, the capsules are mixed with water to obtain an aqueous suspension of capsules. Alternatively, the resulting mixture obtainable in step f) given above may be used directly, avoiding a drying step in between.

The term aqueous suspensions also includes actual solutions or dispersions.

The spray dried capsules in the aqueous suspension, including the flavour, preferably provide 0.4 to 30 wt.%, preferably 0.8 to 20 wt.%, most preferably 1 to 5wt% of the aqueous suspension. These percentages thus represent the dry matter of capsules per total weight of the solution, including water.

The aqueous suspension, however, may comprise further ingredients. For example, it may contain ingredients typically used for coating processes, such as sugars, polyols, soluble carbohydrates, for example hydrocolloids such as gum arabic, locust bean gum, xanthan gum, and/or coloring agents (lake or dyes) such as titanium dioxide, blue color, red color, yellow color, for example.

The aqueous suspension preferably has up to 75 wt.% of solids, for example 1 to 70 wt.% of solids, including the capsules comprising the flavours.

In coatings for chewing gums, for example, the aqueous suspension preferably has about 50 to 70wt% of solids. Accordingly, the aqueous suspension, which is used as a coating solution, preferably comprises about 0.5 to 3% by weight of the total solution of the flavour-capsules, the remainder of the solids being other coating constituents.

The water content of the aqueous suspension may thus be in the range of about 30 wt.% to 99.5 wt.%.

Preferably, the aqueous suspension only contains very small amounts of possibly emulsified oils and/or fats other than those being part of the flavour capsules. For example, the aqueous suspension comprises less than 3wt.%, preferably less than 2wt.% oil and/or fat. More preferably, the aqueous suspension is free of oils and fats.

The inventors of the present invention have observed that little or no oil and/or fat in the aqueous suspension are a prerequisite for flavour retention within the flavour capsules of the present invention.

For the same reason, according to the present invention, the food product is a product in which the steps of drying, baking and/or toasting the coated food product excludes frying.

The process of the present invention further provides the step of coating a food product with the aqueous suspension to obtain a coated food product.

The step of coating the food product with the aqueous suspension may be performed with usually coating or spraying equipment, for example conventional coating pans, sidevented pan coaters, coating drums, fluid bed coaters, for example, with appropriate coating guns. Coating guns include a spraying nozzle suitable to disperse the aqueous solution including the capsules onto the food product, such as an un-cooked or pre-cooked cracker, for example. A typical spraying apparatus suitable for coating the aqueous suspension on a cracker would be a Binks® 95G Gravity Speed Spray Gun, obtainable from Binks MFG Co., Belmont, USA.

The coating step may be a repetitive process, which permits to obtain thicker coatings composed of a multitude of thin individual coatings. These composed coatings may thus comprise higher loads of the capsules of the present invention.

The coating step may be performed at any temperature, depending on the nature of the coating process. Preferably, the coating is performed at ambient or at elevated temperatures (> 25°C).

In an embodiment of the present invention, the step of coating the food product is performed for a period of 1 minute to 10 hours. Preferably, the step of coating is performed for a period of 2 minutes to 7 hours.

In another embodiment of the present invention, the coating is performed by spraying and/or painting the aqueous solution onto the food product, and/or by dipping the food product in the coating solution.

Examples for food products onto which the aqueous solution comprising the flavour-capsules are painted are biscuits, crackers, snacks, bars, cakes, rolls, pastry, dough, frozen dough, and frozen bakery products, for example. The painting can be made with any brush system suitable to paint food-grade ingredients.

Examples for food products which may be coated by dipping the food product into the aqueous solution comprising the flavour-capsules are biscuits, crackers, snacks, bars.

The present invention further provides a step of drying, baking and/or toasting the coated food product.

If the coating was done at elevated temperatures (above 25°C), the drying step actually has been performed in the coating-equipment and forms part of the coating step. In this case, no further drying under elevated temperatures may be required.

Alternatively, if the coating has been performed under ambient conditions (<= 25°C), a drying, baking or toasting step at elevated temperatures may be performed.

Drying may be performed in any drying equipment adapted to the specific coated food product to be dried. Examples for drying equipments are fluidised bed driers and oven dryers, for example.

Generally, the skilled person knows the drying time and temperature required for obtaining a dried coated product. Typically, the drying step is performed at temperatures in the range of 50 to 300°C, preferably 100 to 250°C for a time of 30 s to 3 hours, depending on the product size.

Examples of products that require a drying step are coated chewing gums, compressed tablets, crackers, cookies, cereal bars, extruded cereals, not extruded cereals, pet foods, and snacks.

In a preferred embodiment of the present invention, the drying, baking and/or toasting is performed at temperatures in the range from above 25 to 280°C.

Baking may be performed in any oven suitable to bake the coated food product. Generally, the skilled person knows the baking time and temperature required for obtaining a baked product of a given product category and size. Typically, the baking step is performed at temperatures in the range of 50 to 300°C, preferably 100 to 250°C, for a time of 30 s to 3 hours, depending on the product size.

Examples for baking equipments are different kinds of ovens, such as conveyor ovens, tray ovens, electric ovens, rack ovens, reel ovens, tunnel ovens, impingement ovens and the like.

Examples of products that require a baking step are cookies, crackers, breads, rolls and biscuits.

Toasting may be performed in any equipment suitable to toast the coated food product. Generally, the skilled person knows the toasting time and temperature required for obtaining a baked product of a given product category and size. Typically, the toasting step is performed at temperatures in the range of 50 to 350°C, preferably 110 to 300°C for a time of 30 s to 10 minutes, depending on the product size.

Examples for toasting equipments are different kinds of toasters and/or ovens, for example the ovens mentioned above, or typical toasters. Generally, toasting and baking may be performed in similar equipment, while the toasting generally refers to an exposure for a shorter time to higher temperatures, leading to a browning of the food product's surface, within a short time of maximally about ten (10) minutes.

Examples of products that require a toasting step are snacks, crackers, breads, croutons, cereals, and pastries.

In the context of the present invention, the terms drying, baking and/or toasting, preferably refer to processes during which a coated food product is exposed to hot air, basically with the purpose of rendering the product more palatable or in order to increase the storage time and stability of the coated food product. For example, the step of drying, baking and/or toasting may have the purpose or effect of removing water from the coated food product, thus rendering the product more stable. However, under conditions other than those of the present invention, the exposure to hot air entail a loss of volatile flavours by evaporation.

In an alternative embodiment of the present invention the terms drying, baking and/or toasting also refer to processes during which a coated food product is not exposed to hot air, for example in a microwave oven, basically with the purpose of rendering the product more palatable and/or in order to increase the storage time and stability of the coated food product.

In an embodiment of the present invention, the drying, baking and/or toasting is performed at temperatures in the range of above 25 - 280°C, preferably 45 - 250°C.

Preferably, the food product of the present invention has preferably been subjected to a thermal treatment at a temperature in the range of 30°C to 100°C, more preferably 35 to 69°C. More preferably, this temperature has been applied for at least 3 hours.

In an embodiment the process of the present invention further comprises the step of refrigerating or freezing the food product, before the step of drying, baking and/or toasting the coated food product. Refrigerating refers to a process wherein the food product is exposed to a temperature of <11, preferably <6°C. Freezing refers to a process wherein the food product is exposed to a temperature of 0 or less °C.

Accordingly, the process of the present invention is suitable to prepare typical chilled or frozen foods, which may be commercially obtained in a chilled or frozen form, and which may be cooked, dried, baked, and/or tasted by an individual at home or in a restaurant, for example. The products of the present invention include thus convenient food, which can be quickly prepared from the basis of a pre-cooked product, for example.

The process steps of the present invention are suitable to prepare food products comprising flavours. Furthermore, the process steps were shown to increase flavour performance in a flavour food product, and to reduce loss of flavours in a flavoured food product due to heat treatments during manufacturing.

In an embodiment of the food product of the present invention, the coating is a water-based coating. Preferably, the water-based coating comprises water, which in the further processing of the food product is removed, and capsules based on a micro-organism, a matrix component and at least one flavour. The removal of the water may occur by drying, baking and/or toasting the coated food product. Preferably, the coating of the food product is basically free of fat and/or oil.

In an embodiment, the food products of the present invention are susceptible to be obtained by the process of the present invention

Further advantages will become apparent from the following examples, which describe some embodiments of the present invention in a more detailed manner without limiting the scope of the present invention.

### Examples

### Example 1

### Preparation of Capsules based on Yeast, Maltodextrin and Encapsulated Flavours

100 g spray-dried yeast (Aventine Renewable Energy Company, USA) were dispersed in 375 g water. 75g of flavour (NovaMint Freshmint®, commercially obtainable from Firmenich SA, Switzerland, commercial no. 506038T) are added and the mixture is maintained for 4 hours at 50°C under constant agitation at 150 rpm in a blade stirrer.

Thereafter, 150 g of maltodextrin (DE 18) was added and mixed until the total aqueous mixture was homogenous.

The mixture was then spray dried on a Niro mobile minor® at 210°C inlet and 90°C outlet temperature at a feed rate of 10 ml/minute. A powder of capsules based on a micro-organism, a matrix component and at least one flavour are obtained.

The same procedure is repeated with a butter flavour instead of the mint flavour. Accordingly, 75 g of butter flavour (commercial no: 758904 06101TTB0440) commercially obtainable from Firmenich, Switzerland, was used in the same procedure as outlined above, to obtain butter flavour encapsulated in capsules based on a micro-organism and a matrix component.

### Example 2

### Sugar-free Chewing Gums Coated with Flavour-Capsules based on a Micro-Organism and a Matrix Component

Sugar-free chewing gum pellets were prepared with the ingredients given below:

| Ingredients | Percent (%) |
|---|---|
| Gum base (Cafosa Gum Base Co., Spain) | 30.00 |
| Crystalline sorbitol powder | 53.85 |
| Mannitol powder | 4.00 |
| Sorbitol 70% solution | 10.00 |
| Glycerine | 2.00 |
| Acesulfame potassium | 0.05 |
| Aspartame | 0.10 |
| Total | 100.00 |

Crystalline sorbitol, mannitol, acesulfame potassium and aspartame are dry blended forming a powder of blended sweeteners. Half of the sweetener's blend was added to a sigma-blade mixer. The gum base is heated to soften it and added to the sigma blade mixer (equipped with heated water jacket to perform the mixing at a temperature of about 55°C) and mixed for 2 min. Thereafter, the remaining sweetener's blend and all liquid ingredients (sorbitol 70% solution and glycerine) are added to the mixer and further mixed for 7 min. After a total mixing time of 12 minutes, the unflavoured gum base is removed, shaped to the desired thickness and passed through a pellets forming machine (LWS80 of Hermann Linden, Maschinenfabrik GmbH & Co KG, Germany) to make small chewing gum pellets of 1 g each.

A polyol coating solution for sugar-free chewing gum at 60-65 wt.% solids was prepared in a Pyrex® glass beaker by mixing water with isomalt (95 wt.% of solids), gum Arabic (2 wt.% of solids), TiO₂ (2 wt.% of solids) and 1 wt.% of the mint-flavoured capsules obtained in Example 1 in a Euro-STD mixer obtained from EuroStar, IKA® Werke GmbH & Co KG, Germany, and kept at the temperature of about 55°C.

The polyol solution was pumped by an automatic pump (Type CD-70, Verder Lab Tech GmbH, Germany) at about 55°C to the sugar free chewing gum pellets in a Brucks®-coating pan (Bruccoma L/GII, Germany), by providing 10ml-units of coating solution to the chewing gum pellets about every 5 minutes for applying a total of 47 coating layers.
- Pan speed: 55-60
- Air blower: 60-65%
- Inlet air: 15-20°C
- Outlet air: 20-25° C
- Room temperature: 20-25° C, less than 35-40% relative humidity
- Spraying: 10 ml of sugar-free coating syrup at 55-60° C
- Distribution: 5 minutes
- Drying: 5 minutes
- Coating layers: 47

After about 7 hours, the coating process was completed and the coating made up 30-33 wt.% of the coated chewing gum pellets. The coated pellets had a weight of about 1.5 g.

The same process was repeated but instead of 1wt.% (of solids) of the capsules, 0.2% of liquid mint-flavour (see Example 1) was added to the coating solution, which corresponds to an iso-load of liquid flavour in the chewing gums obtained with encapsulated and non-encapsulated flavour. The remaining 0.8 wt.% to make up 100% of ingredients of the coating solution with the non-encapsulated flavours was held negligible and were therefore ignored.

The chewing gums thus obtained were tested by a panel of 20 persons and intensity perceived by each panellist was recorded over 2 min. and 30 s.

The trained panellists participated in one tasting session and tested two samples each, which were presented in a blind and randomised manner. The intensity of the cooling/mint taste was evaluated on a 0 to 10 linear scale from absent to strong. A Student's t-test was performed to identify significant differences between the two samples.

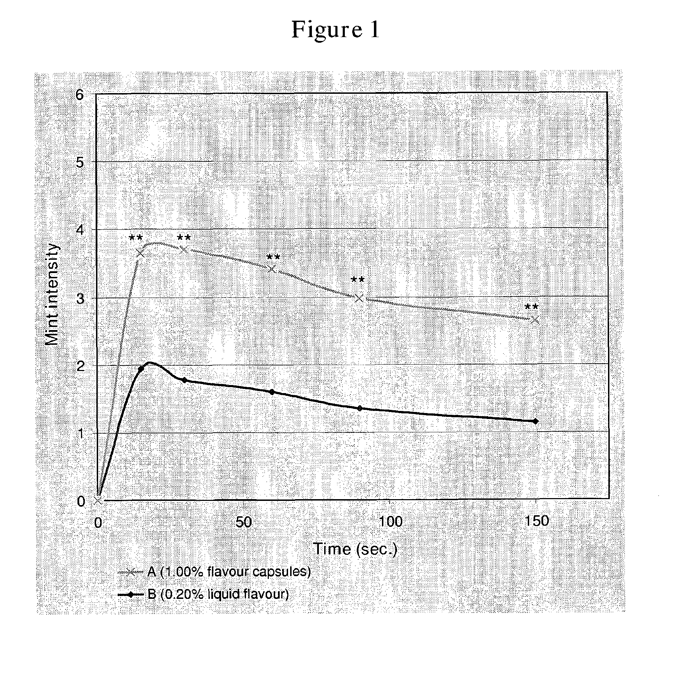

Figure 1 shows mean intensity of chewing gums coated with encapsulated (A) and non-encapsulated flavour (B).

It can be seen from Figure 1 that sugar-free chewing gums coated with encapsulated (yeast and carbohydrate matrix, see Example 1) flavours had significantly higher intensity than chewing gums coated with the same amount of non-encapsulated (liquid) flavours.

### Example 3

### Sugar-Based Chewing Gums Coated with Flavour-Capsules based on a Micro-Organism and a Matrix Component

Sugar-based chewing gum pellets were prepared with the ingredients given below:

| Ingredient | wt.% |
|---|---|
| Gum base (Cafosa Gum Base Co., Spain) | 30 |
| Sucrose powder | 60 |
| Glycerine | 10 |
| Total | 100 |

Half of the sucrose is added to a sigma-blade mixer as used in Example 2, and the gum base is heated to soften and added to the mixer, followed by mixing for 2 min. The remaining sucrose and the glycerine are added to the mixer and further mixed for 7 minutes.

The unflavoured gum base was removed, shaped into desired thickness and passed through the LWS80 pellets forming machine (Hermann Linden, Maschinenfabrik GmbH & Co. KG, Germany) to make small gum pellets (1 gram in weight).

A coating solution was prepared according to Example 2, but sugar (96wt.% of solids) was used instead of isomalt. As a further difference, the coating solution was heated to 35-40°C only and was kept at this temperature during the entire coating process.

Again, one batch of coating solution was prepared in which the 2wt.% (of solids) of encapsulated flavour was replaced by 0.4 wt.% of liquid flavour, resulting in an iso-load of flavour in sugar-based chewing gums coated with encapsulated (A) and non encapsulated (B) flavours.

The process parameters of the Bruck® coating machine are given below:
- Pan speed: 55-60 rpm
- Air blower: 60-65%
- Inlet air: 20-25° C
- Outlet air: 20-25° C
- Room temperature: 20-25° C, less than 35-40% relative humidity
- Spraying: 10 ml of sugar-based coating syrup at 35-40° C
- Distribution: 5 minutes
- Drying: 5 minutes
- Coating layers: 46

The coating was continued for a total time of about 7 hours, during which 46 individual coatings (total of 10 ml per layer) were applied. At the end of the process, the final weight of the coated chewing gum pellets was about 1.5 g, meaning that about 33wt.% of the pellets is made up by the coating.

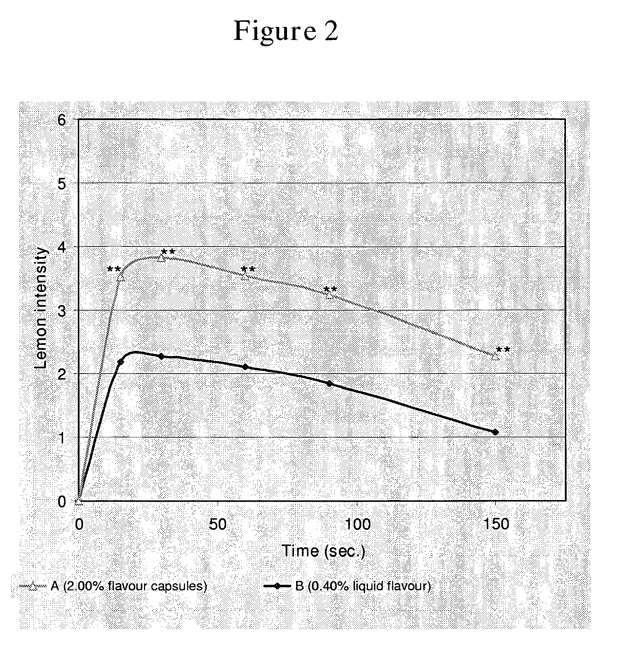

The taste evaluations were performed in the same way as in Example 2. Figure 2 shows mean intensity of sugar-based chewing gums coated with encapsulated (A) and non-encapsulated flavour (B).

It can be seen from Figure 2 that sugar-based chewing gums coated with encapsulated (A: yeast and carbohydrate matrix, see Example 1) flavours had significantly higher intensity than chewing gums coated with the same amount of non-encapsulated (liquid) flavours (B).

### Example 4

### Breakfast Cereals coated with Flavours

Breakfast cereals (Kix®, crispy corn puffs, manufactured by General Mills, USA) were commercially obtained and coated with different liquid and encapsulated flavour for comparing the flavour intensity.

The flavours used were strawberry and honey flavour compositions, commercially obtainable from Firmenich SA, Switzerland with experimental numbers 765385 05NT and 758904 04301T, respectively.

Strawberry and honey-flavoured capsules based on yeast, maltodextrin and encapsulated flavours were made according to the procedure of Example 1 with the flavour compositions indicated above.

Different coating solutions (200 g each) having iso-loads of the same flavour were prepared based on the quantities below:

| | |
|---|---|
| Encapsulated honey flavour: | 3.33 g |
| Liquid honey flavour: | 0.67 g |
| | |
| Encapsulated strawberry flavour: | 5.33 g |
| Liquid strawberry flavour: | 1.07 g |

The coating solutions were prepared by heating 200g of sucrose syrup 68 °Brix to 57°C, adding each of the different flavours to a coating solution and mixing well. The solutions were held at 57°C for 2 hours and stirred occasionally, to obtain two pairs of different coating solutions of 200 g, each pair having an isoload of strawberry and honey flavour respectively.

Breakfast cereal (170 g) was placed in a rotating drum and 30 g of the pertinent coating solution was slowly added. After rotating at 25°C for 5 min. the coating was completed. The coated cereals were dried in a continuous belt oven for 5 min. at 104°C to 3wt.% moisture content, cooled to room temperature and stored in plastic Ziploc® bags.

The breakfast cereals obtained by water based coating of liquid- and yeast and maltodextrin encapsulated flavours at isoloads had the following final composition (wt.%):

| | |
|---|---|
| Honey flavour, encapsulated: | 0.25% |
| Honey, liquid: | 0.05% |
| | |
| Strawberry, encapsulated: | 0.4% |
| Strawberry, liquid: | 0.08% |

The cereals were tasted by three expert tasters after mixing with cold milk. The cereal coated with encapsulated strawberry flavours had a considerably stronger profile than that of the liquid flavour. Also the cereal having a coating with encapsulated honey flavour had a stronger flavour than its liquid flavoured counterpart, however, the difference was slightly less noticeable.

In conclusion, by encapsulating flavours in yeast cells and applying a further carbohydrate matrix, flavours were better retained if applied within a water-based coating solution to breakfast cereals at elevated temperature and/or followed by a heat treatment, such as drying. Encapsulated flavours provided stronger flavour profiles despite the high temperature coating and/or drying process.

### Example 5

### Baked Crackers Spray-Coated with encapsulated Flavours

A water-based flavour coating solution was prepared. The coating solution contained 1 wt.% of the encapsulated butter flavour prepared in Example 1.

Unbaked crackers are prepared according to the ingredients given below:

| Ingredients | Weight percent |
|---|---|
| Wheat Flour, all purpose | 54.82 |
| Sucrose | 2.74 |
| Non-fat milk solids | 0.91 |
| Pregelatinised corn starch | 2.74 |
| Inactive dry yeast | 0.55 |
| Salt (sodium chloride) | 0.91 |
| Sodium bicarbonate | 0.32 |
| Monocalcium phosphate | 0.73 |
| Vegetable shortening, partially hydrogenated | 9.14 |
| Ammonium bicarbonate | 1.10 |
| Water | 26.04 |

The unbaked crackers were prepared by first dissolving ammonium bicarbonate in water and separately mixing all dry ingredients including the fat. Then, all dry ingredients are added to a Hobart® mixer and mixed for 4 minutes. Thereafter, the water-ammonium bicarbonate mixture is added, and the whole mixture is mixed again for 2 minutes.

After mixing, the resulting dough is allowed to rest at room temperature for 15 minutes and sheeted to 2 mm thickness.

8.3 g of the coating solution was spread on 240 g of unbaked cracker dough mixture with a brush.

After the coating with flavours, the dough is cut into uniform pieces (3cm x 3cm) and baked in a continuous oven for 6:30 minutes at 171°C to produce crackers. The crackers are allowed to cool at ambient temperature and are placed in moisture-proof packages.

Four days after packaging, the butter flavour intensity of the crackers was tested by three expert taste testers and was found to have excellent butter flavour.

The results of Examples 2-5 are contrary to the statements of the prior art, according to which yeast-encapsulated flavours were held unsuitable for exposure to high temperatures.

## Claims

1. A method for preparing a food product comprising flavours, the method comprising the steps of
- providing capsules based on a micro-organism, a matrix component comprising a carbohydrate and at least one encapsulated flavour, the capsules being prepared by a process comprising the following steps:
a) mixing yeast with water to obtain an aqueous mixture,
b) adding a flavour to the aqueous mixture,
c) the aqueous mixture including the flavour until at least part of the flavour has passed into the micro-organism,
d) adding the matrix component to the aqueous mixture comprising the at least partly encapsulated flavour, and
e) drying the resulting mixture, or alternatively, using the resulting mixture directly as an aqueous suspension of capsules in the present process,
- mixing the capsules with water to obtain an aqueous suspension of capsules,
- coating a food product with the aqueous suspension to obtain a coated food product, and,
- drying, baking and/or toasting the coated food product, in which the step of drying, baking and/or toasting the coated food product excludes frying.

2. The process according to Claim 1, wherein said aqueous suspension of capsules, before and/or during the process of coating, is heated and/or kept at a temperature in the range of 25-70°C.

3. The process according to Claim 1, wherein said step of coating the food product is performed for a period of 1 minute to 10 hours.

4. The process according to Claim 1, wherein said drying, baking and/or toasting is performed at temperatures in the range of above 25 - 280°C.

5. The process according to Claim 1, wherein said coating is performed by spraying and/or painting the aqueous solution onto the food product, and/or by dipping the food product in the coating solution.

6. The process according to Claim 1, wherein said food product is selected from the group consisting of a chewing gum, a gummy, a compressed tablet, a cracker, a cookie, a cereal bar, a pet food, and a snack.

7. The process according to Claim 1, further comprising the step of refrigerating or freezing the food product, before the step of drying, baking and/or toasting the coated food product.

8. A coated food product obtainable according to the process of Claim 1.

## Patentansprüche

1. Verfahren zum Herstellen eines Aromen umfassenden Nahrungsmittelprodukts, wobei das Verfahren die folgenden Schritte umfasst
- Bereitstellen von Kapseln, basierend auf einem Mikroorganismus, einer ein Kohlehydrat umfassenden Matrixkomponente und mindestens einem eingekapselten Aroma, wobei die Kapseln durch ein Verfahren hergestellt werden, das die folgenden Schritte umfasst:
a) Mischen von Hefe mit Wasser, um ein wässeriges Gemisch zu erhalten,
b) Hinzufügen eines Aromas zu dem wässerigen Gemisch,
c) Rühren des das Aroma einschließenden wässerigen Gemischs, bis zumindest ein Teil des Aromas in den Mikroorganismus übergegangen ist,
d) Hinzufügen der Matrixkomponente zu dem wässerigen Gemisch, umfassend das zumindest teilweise eingekapselte Aroma, und
e) Trocknen des resultierenden Gemischs oder alternativ Verwenden des resultierenden Gemischs direkt als eine wässerige Suspension von Kapseln in dem vorliegenden Verfahren,
- Mischen der Kapseln mit Wasser, um eine wässerige Suspension von Kapseln zu erhalten,
- Beschichten eines Nahrungsmittelprodukts mit der wässerigen Suspension, um ein beschichtetes Nahrungsmittelprodukt zu erhalten, und
- Trocknen, Backen und/oder Toasten des beschichteten Nahrungsmittelprodukts, in welchem der Schritt des Trocknens, Backens und/oder Toastens des beschichteten Nahrungsmittelprodukts das Frittieren ausschließt.

2. Verfahren gemäß Anspruch 1, wobei die wässerige Suspension von Kapseln vor und/oder während des Verfahrens des Beschichtens erhitzt und/oder bei einer Temperatur in dem Bereich von 25-70°C gehalten wird.

3. Verfahren gemäß Anspruch 1, wobei der Schritt des Beschichtens des Nahrungsmittelprodukts für einen Zeitraum von 1 Minute bis 10 Stunden durchgeführt wird.

4. Verfahren gemäß Anspruch 1, wobei das Trocknen, Backen und/oder Toasten bei Temperaturen in dem Bereich von über 25-280°C durchgeführt wird.

5. Verfahren gemäß Anspruch 1, wobei das Beschichten durch Sprühen und/oder Auftragen der wässerigen Lösung auf das Nahrungsmittelprodukt und/oder durch Eintauchen des Nahrungsmittelprodukts in die Beschichtungslösung durchgeführt wird.

6. Verfahren gemäß Anspruch 1, wobei das Nahrungsmittelprodukt aus der Gruppe, bestehend aus einem Kaugummi, einem Gummibärchen, einer gepressten Tablette, einem Cracker, einem Plätzchen, einem Müsliriegel, einem Tierfutter und einem Snack, ausgewählt ist.

7. Verfahren gemäß Anspruch 1, weiterhin umfassend den Schritt, das Nahrungsmittelprodukt vor dem Schritt des Trocknens, Backens und/oder Toastens des beschichteten Nahrungsmittelprodukts zu kühlen oder zu gefrieren.

8. Beschichtetes Nahrungsmittelprodukt, erhältlich gemäß dem Verfahren nach Anspruch 1.

## Revendications

1. Procédé de préparation d'un produit alimentaire comprenant des arômes, le procédé comprenant les étapes consistant à
- fournir des capsules à base d'un micro-organisme, d'un composant matrice comprenant un glucide et d'au moins un arôme encapsulé, les capsules étant préparées par un procédé comprenant les étapes suivantes:
a) mélange d'une levure avec de l'eau pour obtenir un mélange aqueux,
b) ajout d'un arôme au mélange aqueux,
c) agitation du mélange aqueux renfermant l'arôme jusqu'à ce qu'au moins une partie de l'arôme soit passée dans le micro-organisme,
d) ajout du composant matrice au mélange aqueux comprenant ledit arôme au moins partiellement encapsulé, et
e) séchage du mélange résultant, ou en variante, utilisation du mélange résultant directement en tant que suspension aqueuse de capsules dans le présent procédé,
- mélanger les capsules avec de l'eau pour obtenir une suspension aqueuse de capsules,
- enrober un produit alimentaire avec la suspension aqueuse pour obtenir un produit alimentaire enrobé, et,
- sécher, cuire et/ou rôtir le produit alimentaire enrobé, l'étape de séchage, de cuisson et/ou de rôtissage du produit alimentaire enrobé excluant la friture.

2. Procédé selon la revendication 1, dans lequel ladite suspension aqueuse de capsules, avant et/ou pendant le processus d'enrobage, est chauffée et/ou maintenue à une température dans la plage allant de 25 à 70°C.

3. Procédé selon la revendication 1, dans lequel ladite étape d'enrobage du produit alimentaire est réalisée pendant une durée de 1 minute à 10 heures.

4. Procédé selon la revendication 1, dans lequel ledit séchage, cuisson et/ou rôtissage est effectué à des températures dans la plage allant de plus de 25 à 280°C.

5. Procédé selon la revendication 1, dans lequel ledit enrobage est effectué par pulvérisation de la solution aqueuse sur le produit alimentaire et/ou par peinture du produit alimentaire avec la solution aqueuse, et/ou par trempage du produit alimentaire dans la solution d'enrobage.

6. Procédé selon la revendication 1, dans lequel ledit produit alimentaire est choisi dans le groupe constitué par une gomme à mâcher, une matière gélatineuse, un comprimé compressé, un craquelin, un biscuit, une barre de céréales, un aliment pour animaux familiers, et un produit de grignotage.

7. Procédé selon la revendication 1, comprenant en outre l'étape de réfrigération ou de congélation du produit alimentaire, avant l'étape de séchage, de cuisson et/ou de rôtissage du produit alimentaire enrobé.

8. Produit alimentaire enrobé pouvant être obtenu conformément au procédé de la revendication 1.
